Europäisches Patentamt

European Patent Office

Office européen des brevets

(11) Publication number: **0 529 166 A1**

## EUROPEAN PATENT APPLICATION

(21) Application number: **91311966.5**

(22) Date of filing: **23.12.91**

(51) Int. Cl.5: **C10M 171/00**

(30) Priority: **29.08.91 JP 218227/91**
**21.10.91 JP 272212/91**

(43) Date of publication of application:
**03.03.93 Bulletin 93/09**

(84) Designated Contracting States:
**DE GB**

(71) Applicant: **NIPPON SHOKUBAI CO., LTD.**
**1-1, Koraibashi, 4-chome**
**Chuo-ku, Osaka-shi, Osaka(JP)**

(72) Inventor: **Okada, Izuho**
**21-1-510-508 Takezono 3-chome**
**Tsukuba-shi, Ibaraki-ken(JP)**
Inventor: **Asako, Yoshinobu**
**17-22-610 Bunkyo-cho**
**Tsuchiura-shi, Ibaraki-ken(JP)**
Inventor: **Arimatsu, Kiyomi**
**2638-4 Moriyakou, Moriyamachi**
**Kitasouma-gun, Ibaraki-ken(JP)**
Inventor: **Kobayashi, Minoru**
**18-21 Koyadai 2-chome**
**Tsukuba-shi, Ibaraki-ken(JP)**

(74) Representative: **Rees, David Christopher et al**
**Kilburn & Strode 30 John Street**
**London WC1N 2DD (GB)**

(54) **Electrorheological fluids.**

(57) An electrorheological fluid comprising a dispersed phase of dielectric particles having an average particle diameter in the range of from 1 to 50 microns, a sipersion medium of an electrically non-conducting oil, and an additive, said additive being a copolymer (I) obtained by polymerizing a raw-material monomer mixture having as essential components thereof a polymerizable monomer (A) such as (meth)acryloyl group-containing poly-(ethylene glycol) and at least one polymerizable monomer (B) selected from the group consisting of cross-linking monomers and silicone type polymerizable monomers and optionally containing another polymerizable monomer (C).

EP 0 529 166 A1

## BACKGROUND OF THE INVENTION

1. Field of the Invention

This invention relates to an electrorheological fluid. More particularly, this invention relates to an electrorheological fluid which exhibits outstanding electrorheological characteristics as evinced by large shear stress generated in response to application thereto of a relatively weak electric field and a small current density consequently caused to flow, excels in ability to retain generated shear stress and current density stably in spite of the effect of aging, exhibits low initial viscosity in the absence of application of an electric field, and excels particularly in stability of dispersion (capacity for retaining the electrorheological fluid homogeneously for a long time without entailing sedimentation or flotation of the dispersed phase) and in redispersibility (capacity for enabling the fluid which has lost homogeneity in consequence of sedimentation or flotation of the dispersed phase to resume the original state of homogeneity by a weak external energy).

2. Description of the Prior Art

Electrorheological fluid is a fluid which is obtained by dispersing or suspending solid particles in an electrically non-conducting oil and which allows the rheological or flow property thereof to be transformed by application of a change in electric field into a viscoplastic property. Generally, it is known to be a fluid which manifests the so-called Winslow's effect of conspicuously increasing viscosity and inducing large shear stress in response to the application of an external electric field thereto. Since this Winslow's effect is characterized by a high response speed, efforts are being made to realize utility of the electrorheological fluid in various devices such as, for example, engine mount, clutch, dumper, brake, shock absorber, actuator, valve, and ink jet.

The electrorheological fluids heretofore known to the art include those having solid particles such as of cellulose, starch, soybean casein, and silica gel dispersed in such electrically non-conducting oils as silicone oil, diphenyl chloride, and transformer oil. The electrorheological fluids which use cellulose, starch, soybean casein, and silica gel, however, have a fault in that they generate shear stress only in small magnitudes.

Electrorheological fluids capable of generating shear stress in high magnitudes include a suspension of a powdered ion-exchange resin in a higher alkyl ester of an aromatic carboxylic acid (Japan KOKAI 50-92,278) and fluid comprising a suspension of a liquid phase formed of a dielectric liquid and a dispersed particulate phase formed of lithium hydrazinium sulfate (U.S. Patent No. 4,772,407). However, these electrorheological fluids are deficient in stability of dispersion during application of an electric field and in redispersibility to be manifested after sedimentation or flotation of the dispersed phase. When these fluids use a dispersion medium of high viscosity enough to preclude separation of the dispersed phase or contain the dispersed phase in a high concentration, they have a fault in respect that their flowability is poor.

Approaches to the improvement of stability of dispersion have been proposed a fluid which comprises silica gel, non-conducting oil, one or more polymers soluble in the dispersion medium, the polymers containing 0.1 to 10% by weight of N and/or OH-containing compounds and 25 to 83% by weight of $C_4$ to $C_{24}$-alkyl groups (U.S. Patent No. 4,668,417) and a method which comprises adding a polysiloxane possessing an amino group or the like to an electrorheological fluid having silica gel or aluminum silicate as a dispersed phase and silicone oil as an electrically non-conducting oil (U.S. Patent Nos. 4,645,614 and 4,702,855). These electrorheological fluids, however, have the disadvantage that they not only generate shear stress in unduly small magnitudes but also exhibit initial viscosity in unduly high magnitudes.

For the purpose of improving redispersibility, electrorheological fluids containing extremely minute particles (Japan KOKAI 3-166,295 and 3-160,094) have been proposed. These electrorheological fluids, however, have the disadvantage that they suffer from inferior stability of dispersion during the absence of application of an electric field and betray unstable performance as an electrorheological fluid.

Thus, the electrorheological fluids reported to date do not simultaneously satisfy the four requirements (1) that the shear stress to be generated should be large, (2) that the generated shear stress and the current density should excel in stability in spite of the effect of aging, (3) that the initial viscosity should be low, and (4) that the stability of dispersion and the redispersibility should be excellent.

This invention aims to solve the problems suffered by the conventional electrorheological fluids as described above.

An object of this invention, therefore, is to provide an electrorheological fluid which excels in electrorheological characteristics as evinced by large shear stress generated in response to application thereto of a relatively weak electric field and a small current density consequently allowed to flow therein, excels in ability to retain the generated shear stress and current density stably in spite of the effect of aging, possesses low initial viscosity in the absence of an electric field, and excels particularly in stability of dispersion and redispersibility.

## SUMMARY OF THE INVENTION

This invention is directed to provision of an electrorheological fluid comprising a disprsed phase of dielectric particles having an average particle diameter in the range of from 1 to 50 microns, an electrically non-conducting oil, and an additive, characterized by the additive being a copolymer (I) obtained by polymerizing a raw-material monomer mixture having a polymerizable monomer (A) and at least one polymerizable monomer (B) selected from the group consisting of cross-linking monomers and silicone type polymerizable monomers as essential components and, when necessary, containing another polymerizable monomer (C); the polymerizable monomer (A) being a polymerizable monomer having as a main structural unit thereof a structural unit (a) represented by the general formula (i):

$$-(R^1-O)_n- \qquad (i)$$

wherein $R^1$ stands for an ethylene group, a propylene group, a trimethylene group, or a tetramethylene group and n for an numerical value of at least 4 and/or a structural unit (b) represented by the general formula (ii):

$$-(CH_2-CR^2X)- \qquad (ii)$$

wherein $R^2$ stands for a hydrogen atom or a methyl group, X for -CN or -COOR$^3$, and $R^3$ for an alkyl group of 1 to 4 carbon atoms and having an average molecular weight of at least 400, the cross-linking monomer being at least one member selected from the group consisting of aromatic compounds containing at least two polymerizable unsaturated groups in the molecular unit thereof, compounds containing at least two (meth)acryl groups in the molecular unit thereof, and compounds containing at least two allyl groups in the molecular unit thereof, and the silicone type polymerizable monomer being a silicone type polymerizable monomer having as a main structural unit thereof a structural unit (c) represented by the general formula (iii):

$$-(SiR^4R^5O)- \qquad (iii)$$

wherein $R^4$ and $R^5$ independently stand for an alkyl group or an aryl group and/or a structural unit (d) represented by the general formula (iv):

$$(R^6{}_3SiO)_3Si- \qquad (iv)$$

wherein $R^6$ stands for an alkyl group or an aryl group and having an average molecular weight of at least 400.

## DESCRIPTION OF THE PREFERRED EMBODIMENT

For the purpose of enhancing the stability of dispersion of an electrorheological fluid as a colloidal dispersion, in other words, decreasing the speed of sedimentation of the dispersed phase of the fluid, it is generally necessary to use an additive which possesses an ability to adsorb the dispersed phase and derives stabilization due to steric repulsion. On the other hand, the electrorheological fluid which is formed of a dispersed phase possessing low initial viscosity and having particle diameters of at least 1 micron generally undergoes no permanent dispersion in spite of the use of the additive capable of deriving steric stabilization and eventually forms a sedimented layer. This fluid's ability to redisperse the sedimented layer is degraded in proportion as the adsorbing power of the additive is increased or the density of adsorption is increased.

The study conducted with a view to realizing these apparently contradicting behaviors of adsorption to be exhibited by the additive to the dispersed phase has led to perfection of this invention. To be specific, the copolymer (I) to be used in this invention has an ability to adsorb a dispersed phase in an electrically non-conducting oil because it possesses functional groups exhibiting Lewis basicity and this copolymer (I) exhibits low adsorption density because it possesses substantial insolubility such that it is partially or wholly swelled with the non-conducting oil and it is not completely dissolved in the non-conducting oil. It has been found that the copolymer (I) of this quality is fully effective in improving the stability of dispersion without any sacrifice of the redispersibility.

The additive to be used in the electrorheological fluid of this invention must be the copolymer (I) which is obtained by polymerizing a raw-material monomer mixture having the polymerizable monomer (A) and the polymerizable monomer (B), i.e. at least one member selected from the group consisting of cross-linking monomers and silicone type polymerizable monomers, as essential components thereof and, when necessary, containing another polymerizable monomer (C).

The copolymer (I) destined to form an additive for the electrorheological fluid of this invention must use the polymerizable monomer (A) mentioned above in the raw-material monomer mixture. If the polymerizable monomer (A) is not used, the produced electrorheological fluid cannot attain conspicuously improved stability of dispersion.

The polymerizable monomer (A) is preferred to have as main structural unit thereof a structural unit (a) represented by the general formula (i):

$$-(R^1-O)_n- \quad (i)$$

wherein $R^1$ stands for an ethylene group, a propylene group, a trimethylene group, or a tetramethylene group and n for a numerical value exceeding at least 4 and desirably falling in the range of from 4 to 100, preferably from 4 to 25 and/or a structural unit (b) represented by the general formula (ii):

$$-(CH_2-CR^2X)- \quad (ii)$$

wherein $R^2$ stands for a hydrogen atom or a methyl group, X for -CN or -COOR³, and $R^3$ for an alkyl group of 1 to 4 carbon atoms and have an average molecular weight exceeding at least 400 and desirably falling in the range of from 400 to 20,000, preferably from 400 to 8,000. Examples of the polymerizable monomers are poly(alkylene glycol) containing a polymerizable double bond such as (meth)acryloyl group-containing poly(ethylene glycol), (meth)acryloyl group-containing methoxy poly(ethylene glycol), (meth)acryloyl group-containing poly(ethylene glycol)-poly(tetramethylene glycol), styryl group-containing poly(ethylene glycol), p-isopropenylbenzyl group-containing poly(ethylene glycol), (meth)acryloyl group-containing poly(propylene glycol), styryl group-containing poly(propylene glycol), p-isopropenylbenzyl group-containing poly(propylene glycol), (meth)acryloyl group-containing poly(tetramethylene glycol), and p-isopropenylbenzyl group-containing poly(tetramethylene glycol) and (meth)acrylic ester or acrylonitrile type polymers containing a polymerizable double bond such as (meth)acryloyl group-containing poly(methyl (meth)acrylate), styryl group-containing poly(methyl (meth)acrylate), p-vinylbenzyl group-containing poly(methyl (meth)acrylate), p-isopropenylbenzyl group-containing poly(methyl (meth)acrylate), allyl group-containing poly(methyl (meth)-acrylate), (meth)acryloyl group-containing poly(butyl (meth)acrylate), p-vinylbenzyl group-containing poly-(butyl (meth)acrylate), p-isopropenylbenzyl group-containing poly(butyl (meth)acrylate), and (meth)acryloyl group-containing acrylonitrile-styrene copolymer. One member or a mixture of two or more members selected from among the polymerizable monomers cited above can be used herein. Among other polymerizable monomers mentioned above, such (meth)acryloyl group-containing compounds as (meth)-acryloyl group-containing poly(ethylene glycol) and (meth)acryloyl group-containing methoxypoly(ethylene glycol) prove to be particularly desirable.

Though the content of the structural unit (a) and/or the structural unit (b) in the polymerizable monomer (A) is not particularly restricted, it is preferred to exceed at least 5% by weight as nitrogen element and/or oxygen element, based on the amount of the polymerizable monomer (A).

The copolymer (I) destined to serve as the additive to the electrorheological fluid of this invention must use as a raw-material monomer mixture thereof the polymerizable monomer (B) which is at least one member selected from the group consisting of cross-linking monomers and silicone type polymerizable monomers. If this polymerizable monomer (B) is not used, the produced electrorheological fluid cannot attain conspicuously improved stability of dispersion.

The cross-linking monomer to be used in this invention is at least one member selected from the group consisting of aromatic compounds containing at least two polymerizable unsaturated groups in the molecular unit thereof, compounds containing at least two (meth)acryl groups in the molecular unit thereof, and compounds containing at least two allyl groups in the molecular unit thereof. Examples of the aromatic compounds containing at least two polymerizable unsaturated groups in the molecular unit thereof are polyfunctional polymerizable compounds such as divinylbenzene, vinyl propenylbenzene, vinyl isopropenylbenzene, vinyl isobutenylbenzene, diisopropenylbenzene, isopropenyl isobutenylbenzene, diisobutenylbenzene, divinyl methylbenzene, divinyl ethylbenzene, divinyl dimethylbenzene, trivinylbenzene, triisopropenylbenzene, divinylnaphthalene, vinyl isopropenylnaphthalene, diisopropenylnaphthalene, divinylanthracene, and divinyl phenanthrene, examples of the compounds containing at least two (meth)acryl groups in the molecular unit thereof are polyfunctional polymerizable (meth)acrylate derivatives such as ethylene glycol di(meth)acrylates, diethylene glycol di(meth)acrylates, triethylene glycol di(meth)acrylates, propylene glycol di(meth)acrylates, dipropylene glycol di(meth)acrylates, tripropylene glycol di(meth)acrylates, 1,3-butylene glycol di(meth)acrylates, 1,4-butanediol di(meth)acrylates, 1,6-hexanediol di(meth)acrylates, neopentyl glycol di(meth)acrylates, tris(2-hydroxyethyl)isocyanurate tri(meth)acrylates, pentaerythritol tetra(meth)-acrylates, pentaerythritol tri(meth)acrylates, dipentaerythritol penta(meth)acrylates, trimethylolpropane tri-(meth)acrylates, ditrimethylolpropane tetra(meth)acrylates, glycerol di(meth)acrylates, tetramethylolmethane tri(meth)acrylates and tetramethylolmethane tetra(meth)acrylates and polyfunctional polymerizable (meth)-acrylamide derivatives such as N,N′-methylene bis[(meth)acrylamides] and N,N′-ethylene bis[(meth)-acrylamides]; and examples of the compounds containing at least two allyl groups in the molecular unit thereof are polyfunctional polymerizable allyl derivatives such as diethylene glycol diallyl ether, diallyl chlorendate, diallyl phthalate, diallyl hexahydrophthalate, and triallyl trimellitate. One member or a mixture of two or more members selected from those cited above can be used herein. Among other compounds mentioned above, polyfunctional polymerizable aromatic compounds such as divinyl benzene prove to be particularly desirable.

The silicone type polymerizable monomer to be used in this invention is preferred to be a silicone type polymerizable monomer which has as a main structural unit a structural unit (c) represented by the general formula (iii):

$$-(SiR^4R^5O)- \qquad (iii)$$

wherein $R^4$ and $R^5$ independently stand for an alkyl group or an aryl group, preferably for a methyl group and/or a structural unit (d) represented by the general formula (iv):

$$(R^6{}_3SiO)_3Si- \qquad (iv)$$

wherein $R^6$ stands for an alkyl group or an aryl group, preferably for a methyl group and has an average molecular weight exceeding at least 400 and desirably falling in the range of from 400 to 20,000, preferably from 400 to 10,000. Examples of the silicone type polymerizable monomers are vinyl group-containing poly-(dimethyl siloxane), (meth)acryloyl group-containing poly(dimethyl siloxanes), styryl group-containing poly-(dimethyl siloxane), vinyl group-containing partially octyl-substituted poly(dimethyl siloxane), (meth)acryloyl group-containing partially octyl-substituted poly(dimethyl siloxane), styryl group-containing partially octyl-substituted poly(dimethyl siloxane), vinyl group-containing partially phenyl-substituted poly(dimethyl siloxane), (meth)acryloyl group-containing partially phenyl-substituted poly(dimethyl siloxane), styryl group-containing partially phenyl-substituted poly(dimethyl siloxane), and tris(trimethylsiloxy)silylpropyl (meth)-acrylates. One member or a mixture of two or more members selected from the silicone type polymerizable monomers cited above can be used herein. Among other silicone type polymerizable monomers mentioned above, (meth)acryloyl group-containing poly(dimethyl siloxane) prove to be particularly desirable.

Though the content of the structural unit (c) and/or the structural unit (d) in the silicone type polymerizable monomer is not particularly restricted, it is preferred to exceed at least 20% by weight as silicon element, based on the amount of the silicone type polymerizable monomer.

The copolymer (I) destined to form the additive for the electrorheological fluid of this invention can contain the other polymerizable monomer (C) to the extent not so much as to degrade the quality of the electrorheological fluid to be produced.

The other polymerizable monomer (C) is only preferred to be polymerizable with the polymerizable monomer (A) and the polymerizable monomer (B). Examples of the other polymerizable monomers are olefins such as ethylene, propylene, butylene, pentene, hexene, heptene, octene, butadiene, and isoprene; halogenated olefins such as vinyl fluoride, vinyl chloride, vinyl bromide, vinylidene fluoride, vinylidene chloride, and vinylidene bromide; α, β-unsaturated aryls such as styrene, methyl styrene, ethyl styrene, propyl styrene, butyl styrene, pentyl styrene, hexyl styrene, heptyl styrene, octyl styrene, dimethyl styrene, methylethyl styrene, methylpropyl styrene, diethyl styrene, dipropyl styrene, trimethyl styrene, tetramethyl styrene, propenylbenzene, butenylbenzene, vinylnaphthalene, methyl vinylnaphthalene, ethyl vinylnaphthalene, propyl vinylnaphthalene, butyl vinylnaphthalene, pentyl vinylnaphthalene, hexyl vinylnaphthalene, heptyl vinylnaphthalene, octyl vinylnaphthalene, dimethyl vinylnaphthalene, methyl ethyl vinylnaphthalene, methyl propyl vinylnaphthalene, diethyl vinylnaphthalene, ethyl propyl vinylnaphthalene, dipropyl vinylnaphthalene, trimethyl vinylnaphthalene, tetramethyl vinylnaphthalene, vinylanthracene, methyl vinylanthracene, vinylphenanthrene, and methyl vinylphenanthrene; vinyl ethers such as methyl vinyl ether, ethyl vinyl ether, propyl vinyl ether, and phenyl vinyl ether; vinyl esters such as vinyl acetate, vinyl propionate, and vinyl butanoate; (meth)acrylonitriles; (meth)acrylic acids and salts thereof such as (meth)acrylic acids, sodium (meth)acrylates, and ammonium (meth)acrylates; (meth)acrylic esters such as methyl (meth)acrylates, ethyl (meth)acrylates, propyl (meth)acrylates, butyl (meth)acrylates, cyclohexyl (meth)acrylates, octyl (meth)-acrylates, decyl (meth)acrylates, dodecyl (meth)acrylates, and 2-hydroxyethyl (meth)acrylates; (meth)-acrylamides such as (meth)acrylamides and N,N-dimethyl(meth)acrylamides; and heterocycle-containing polymerizable monomers such as vinyl pyrrolidone. One member or a mixture of two or more members selected from the other polymerizable monomers cited above can be used herein. Among other polymerizable monomers mentioned above, $\alpha$, $\beta$-unsaturated aryls such as styrene and (meth)acrylic esters prove to be particularly desirable.

From the viewpoint of enabling the electrorheological fluid of this invention to attain high stability of dispersion and redispersibility, the copolymer (I) to be used in the electrorheological fluid is preferred to be obtained by polymerizing a raw-material monomer mixture comprising 0.2 to 40% by weight of the polymerizable monomer (A), 0.5 to 15% by weight of a cross-linking monomer as the polymerizable monomer (B), and 45 to 99.3% by weight of the other polymerizable monomer (C), preferably 0.5 to 20% by weight of the polymerizable monomer (A), 0.5 to 10% by weight of the cross-linking monomer as the polymerizable monomer (B), and 70 to 99% by weight of the other polymerizable monomer providing the percentages by weight mentioned above are based on the amounts of the pertinent components to be combined preparatorily to the polymerization and the total of the amounts of the monomer (A), the cross-linking monomer (B), and the polymerizable monomer (C) is 100% by weight.

From the viewpoint of enabling the electrorheological fluid to attain still higher stability of dispersion, the copolymer (I) is preferably obtained by polymerizing a raw-material monomer mixture comprising 0.5 to 40% by weight of the polymerizable monomer (A), 3 to 70% by weight of the silicone type polymerizable monomer as the polymerizable monomer (B), and 0 to 90% by weight of the other polymerizable monomer (C), more preferably 1 to 30% by weight of the polymerizable monomer (A), 5 to 50% by weight of the silicone type polymerizable monomer as the polymerizable monomer (B), and 20 to 80% by weight of the other polymerizable monomer (C) providing the percentages by weight mentioned above are based on the amounts of the pertinent components to be combined preparatorily to the polymerization and the total of the amounts of the monomer (A), the silicone type polymerizable monomer (B), and the other monomer (C) is 100% by weight.

For the copolymer (I) to be more preferable, this copolymer (I) is obtained by polymerizing a raw-material monomer mixture comprising 0.5 to 40% by weight of the polymerizable monomer (A), 0.5 to 15% by weight of the cross-linking monomer and 3 to 70% by weight of the silicone type polymerizable monomer, and 0 to 90% by weight of the other polymerizable monomer (C), more preferably 1 to 30% by weight of the polymerizable monomer (A), 1 to 20% by weight of the cross-linking monomer and 5 to 50% by weight of the silicone type polymerizable monomer, and 10 to 70% by weight of the other polymerizable monomer (C) providing the percentages by weight mentioned above are based on the amounts of the pertinent components to be combined preparatorily to the polymerization and the total of the amounts of the monomer (A), the cross-linking monomer and the silicone type polymerizable monomer, and the other monomer (C) is 100% by weight.

The method to be used for producing the copolymer (I) as a macromolecular dispersant destined to form the additive for the electrorheological fluid of this invention is not particularly restricted. There can be cited for example, a method of polymerization which comprises combining the polymerizable monomer (A), the polymerizable monomer (B) selected from among cross-linking monomers and silicone type polymerizable monomers, and optionally the other monomer (C) thereby preparing a raw-material monomer mixture and heating the raw-material monomer mixture, when necessary, by the use of a polymerization catalyst such as a peroxide, an azo compound, or a redox type compound and other additives. Manners of polymerization can include, any of the known methods of polymerization such as solution polymerization, bulk polymerization, emulsion polymerization, dispersion polymerization, precipitation polymerization, and suspension polymerization. In point of quality, the electrorheological fluid obtained by a method of polymerization such as emulsion polymerization, precipitation polymerization, dispersion polymerization, or suspension polymerization among other methods of polymerization proves to be particularly desirable. In point of the quality of the produced electrorheological fluid, the polymerization is preferred to be carried out in an aqueous solvent having a water content of at least 50% by weight or an alcohol type solvent having an alcohol content of at least 50% by weight. The mass containing the produced polymer may be subjected, when necessary, to such aftertreatments as purification by reprecipitation, displacement of the solvent, expulsion of the solvent by distillation, drying, and pulverization.

The dielectric particles destined to form the dispersed phase of the electrorheological fluid of this invention are required to have an average particle diameter in the range of from 1 to 50 microns, preferably from 1 to 30 microns. If the average particle diameter of the dispersed phase is less than 1 micron, the produced electrorheological fluid fails to produce large shear stress in response to application of an electric field. Conversely, if the dielectric particles have an average particle diameter exceeding 50 microns, the produced electrorheological fluid fails to acquire ideal stability of dispersion in the absence of application of an electric field.

The dielectric particles destined to form the dispersed phase of the electrorheological fluid of this invention have no particular restriction except for the requirement that they should be polarized in response to application of an electric field. They can be in any of the known types such as, for example, ion polarization type, dipolar polarization type, electron polarization type, and surface polarization type. Examples of the dielectric particles are particles of organic polymers and inorganic substances which possess an ion-exchange capacity, particles of inorganic dielectric substances formed of at least two elements widely different in electronegativity, particles of organic polymers possessing such functional groups as hydroxyl group, amino group, amide group, and carbonyl group which exhibit polarity, and composite particles produced by performing an insulating treatment on the surface of conductors such as of metals and carbon. Among other dielectric particles cited above, organic polymer particles possessing a cation-exchange capacity such as particles of a sulfonic acid group-containing polystyrene type polymer prove to be particularly desirable in point of shear stress properties.

The sulfonic acid group-containing polystyrene type polymers have cations which are released by dissociation in the presence of a polar solvent such as water. These cations are not particularly restricted by kind. Examples of the cations are hydrogen ion; metallic cations such as lithium ion, sodium ion, potassium ion, calcium ion, magnesium ion, aluminum ion, cuprous ion, and cupric ion; and organic cations such as tetramethyl ammonium ion and pyridinium ion. The method to be adopted for the production of the dielectric particles destined to be used as the dispersed phase in this invention is not particularly restricted. The dielectric particles can be synthesized by any of the known methods. The commercially available dielectric particles can be used either in their unmodified form or in a further pulverized or otherwise suitably treated form.

The electrically non-conducting oil which can be used as a dispersing medium for the electrorheological fluid of this invention has no particular restriction except for the requirement that it should be a substantially non-conducting oil. Examples of the non-conducting oil are aliphatic hydrocarbons such as dodecane, hexadecane, octadecane, and liquid paraffin; aromatic hydrocarbons such as benzene, naphthalene, anthracene, and phenanthrene; alkyl-substituted aromatic hydrocarbons such as toluene, ethylbenzene, propylbenzene, butylbenzene, pentylbenzene, octylbenzene, dodecylbenzene, xylene, and trimethylbenzene; hydrocarbon type thermal media such as proprietary products of Nippon Steel Chemical Co., Ltd. marketed under trademark designations of Therm-S 300, Therm-S 700, Therm-S 800, and Therm-S 900, a proprietary product of Nippon Sekiyu K.K. marketed under trademark designation of Hightherm PS-5, and a proprietary product of Nippon Petrochemical K.K. marketed under trademark designation of Nisseki Highsol SAS-296; higher alcohol esters of aromatic polycarboxylic acids such as didecyl phthalate and trioctyl trimellitate; halogen-containing organic compounds such as benzene fluoride, benzene chloride, benzene bromide, and naphthalene fluoride; and silicone oils such as poly(dimethyl siloxane), alkyl-substituted poly-(dimethyl siloxane), allyl-substituted poly(dimethyl siloxane), and poly(diphenyl siloxane). One member or a mixture of two or more members selected from among the non-conducting oil cited above can be used herein. Among other non-conducting oil mentioned above, silicone type non-conducting liquids having a silicone oil content of at least 50% by weight prove to be particularly preferable in the sense that they enable the produced electrorheological fluid to acquire high redispersibility. The method to be adopted for combining the components of the electrorheological fluid of this invention is not particularly restricted. This combination is accomplished, for example, by mixing the dielectric particles destined to form the dispersed phase and the copolymer (I) destined to form the additive with the electrically non-conducting oil as a dispersing medium.

The ratio between the dispersed phase and the non-conducting oil in the electrorheological fluid of this invention is desired to be in the range of from 50 to 500, preferably from 100 to 400, parts by weight of the latter based on 100 parts by weight of the former. If the amount of the non-conducting oil exceeds 500 parts by weight, there are times when the shear force acquired by the produced electrorheological fluid in response to application of an electric field is not amply large. Conversely, if the amount of the non-conducting oil is less than 50 parts by weight, there are times when the produced composition itself is deficient in flowability and, therefore, is not easily used as an electrorheological fluid.

The copolymer (I) to be used as an additive for the electrorheological fluid of this invention is desired to be in an amount which falls in the range of from 0.1 to 30, preferably from 1 to 30, parts by weight based on 100 parts by weight of the dispersed phase. If the amount of the copolymer (I) to be used is less than 0.1 part by weight based on the amount of the dispersed phase, there are times when the stability of dispersion is not fully improved. Conversely, if this amount exceeds 30 parts by weight, there are times when the excess of the amount of the copolymer (I) does not give a proportionate addition to the stability of dispersion and the initial viscosity of the produced electrorheological fluid is so high as to impair the ease with which the fluid is used.

The electrorheological fluid of this invention, for the sake of adjustment of viscosity or improvement of shear stress, may incorporate therein various known additives such as, for example, macromolecular dispersant, surfactant, macromolecular viscosity enhancer, and extremely fine particles.

Now, this invention will be described more specifically below with reference to working examples. It should be noted, however, that the scope of this invention is not limited to these working examples exclusively.

Referential Example 1

Four handred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 2 g of a methacryloyl group-containing acrylonitrile-styrene copolymer (a product of Toa Gosei Chemical Industry Co., Ltd. having an average molecular weight of 6,000, found by elementary analysis to have a nitrogen content of 5.8% and an oxygen content of 4.0%, and marketed under trademark designation of "Macromonomer AN-6") as a polymerizable monomer (A), 3 g of industrial grade divinylbenzene (a mixture of 55% by weight of divinylbenzene as a cross-linking monomer, 35% by weight of ethyl styrene, etc. produced by Wako Pure Chemical Industries Ltd.), and 95 g of styrene was placed and stirred by a dispersing device at a rate of 20,000 rotations per minute for two minutes as kept swept with nitrogen. The resultant mixture was subjected to a polymerization reaction by three hours'heating at 70°C and four hours'heating at 90°C. By the determination of the non-volatile content of the produced reaction solution, the conversion of the monomer was found to be 100%. A solid polymerization product as a copolymer (I) (hereinafter referred to as "additive (1)") was obtained by heating the reaction solution under a decreased pressure in an evaporator thereby expelling water by distillation and drying the residual solid overnight in an air oven at 80°C.

Referential Example 2

Eight hundred (800) g of deionized water, 2 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 1 g of a methacryloyl group-containing methoxy poly(ethylene glycol) (a product of Shinnakamura Kagaku Kogyo K.K. having a polymerization degree of poly(ethlene glycol) moiety, n, of about 23 and an average molecular weight of about 1,100, found by elementary analysis to have an oxygen content of 37%, and marketed under trademark designation of "NK Ester M-230G"), 10 g of ethylene glycol dimethacrylate as a cross-linking monomer and 89 g of methyl methacrylate was placed and stirred by a dispersing device at a rate of 20,000 rotations per minute for two minutes as kept swept with nitrogen. The produced mixture was subjected to a polymerization reaction by four hours'heating at 70°C and four hours'heating at 90°C. By the determination of the non-volatile content of the produced reaction solution, the conversion of the monomer was found to be 100%. A solid polymerization product as a copolymer (I) (hereinafter referred to as "additive (2)") was obtained by heating the reaction solution under a decreased pressure in an evaporator thereby expelling water by distillation and drying the residual solid overnight in an air oven at 80°C.

Referential Example 3

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 1 g of a methacryloyl group-containing methoxy poly(ethylene glycol) (a product of Shinnakamura Kagaku Kogyo K.K., having a polymerization degree of poly(ethylene glycol) moiety, n, of about 23 and an average molecular weight of about 1,100, found by elementary analysis to have an oxygen content of 37%, and marketed under trademark designation of "NK Ester M-230G"), 5 g of industrial grade divinylbenzene (a mixture of 55% by weight of divinylbenzene as a cross-linking monomer, 35% by weight of ethyl styrene, etc. produced by Wako Pure Chemical Industries, Ltd.), and 94 g of styrene was placed and stirred by a dispersing device at a rate of 20,000 rotations per minute for two minutes as kept swept with nitrogen. The resultant mixture was subjected to a polymerization reaction by three hours'heating at 70°C and four hours'heating at 90°C. By the determination of the non-volatile content of the reaction solution, the conversion of the monomer was found to be 100%. A solid polymerization product as a copolymer (I) (hereinafter referred to as "additive (3)") was obtained by heating the reaction solution under a decreased pressure in an evaporator thereby expelling water by distillation and drying the residual solid overnight in an air oven at 80°C.

Referential Example 4

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 1 g of a methacryloyl group-containing poly(methyl methacrylate) (a product of Toa Gosei Chemical Industry Co., Ltd. having an average molecular weight of 6,000, found by elementary analysis to have an oxygen content of 32%, and marketed under trademark designation of "Macromonomer AA-6"), 5 g of industrial grade divinylbenzene (a mixture of 55% by weight of divinylbenzene as a cross-linking monomer, 35% by weight of ethyl styrene, etc. produced by Wako Pure Chemical Industries, Ltd.), and 94 g of styrene was placed and stirred by a dispersing device at a rate of 20,000 rotations per minute for two minutes as kept swept with nitrogen. The resultant mixture was subjected to a polymerization reaction by three hours'heating at 70°C and four hours'heating at 90°C. By the determination of the non-volatile content of the produced reaction solution, the conversion of the monomer was found to be 100%. A solid polymerization product as a copolymer (I) (hereinafter referred to as "additive (4)") was obtained by heating the reaction solution under a decreased pressure in an evaporator thereby expelling water by residual solid and drying the distillate overnight in an air oven at 80°C.

Referential Example 5

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 1 g of methacryloyl group-containing polybutyl acrylate (a product of Toa Gosei Chemical Industry Co., Ltd. having an average molecular weight of 6,000, found by elementary analysis to have an oxygen content of 25%, and marketed under trademark designation of "Macromonomer AB-6"), 5 g of industrial grade divinylbenzene (a mixture of 55% by weight of divinylbenene as a cross-linking monomer, 35% by weight of ethyl styrene, etc. produced by Wako Pure Chemical Industries Ltd.), and 94 g of styrene was placed and stirred by a dispersing device at a rate of 20,000 rotations per minute for two minutes as kept swept with nitrogen. The resultant mixture was subjected to a polymerization reaction by three hours' heating at 70°C and four hours'heating at 90°C. By the determination of the non-volatile content of the produced reaction solution, the conversion of the monomer was found to be 100%. A solid polymerization product as a copolymer (I) (hereinafter referred to as "additive (5)) was obtained by heating the reaction solution under a decreased pressure in an evaporator thereby expelling water by distillation and drying the residual solid overnight in an air oven at 80°C.

Referential Example 6

Four hundred (400) g of deoionized water, 4 g of sodium dodecylsulfonate, and 1 g of sodium persulfate were placed and dissolved in one another in a 1,000 mℓ, four-neck flask provided with a stirrer, a reflux condenser, a thermomenter, and a nitrogen port. In the resultant solution, a monomer mixture consisting of 0.4 g of methacryloyl group-containing methoxy poly(ethylene glycol) (a product of Shinnakamura Kagaku Kogyo K.K. having a polymerization degree of poly(ethylene glycol) moiety, n, of about 23 and an average molecular weight of about 1,100, found by elementary analysis to have an oxygen content of 37%, and marketed under trademark designation of "NK Ester M-230G"), 5 g of industrial grade divinylbenzene (a mixture of 55% by weight of divinylbenzene as a cross-linking monomer, 35% by weight of ethyl styrene, etc. produced by Wako Pure Chemical Industires Ltd.), and 94.6 g of methyl methacrylate was placed and stirred by a dispersing device at a rate of 20,000 rotations per minute for two minutes as kept swept with nitrogen. The resultant mixture was subjected to a polymerization by three hours' heating at 70°C and four hours' heating at 90°C. By the determination of the non-volatile content of the produced reaction solution, the conversion of the monomer was found to be 100%. A solid polymerization product as a copolymer (I) (hereinafter referred to as "additive (6)) was obtained by heating the reaction solution under a decreased pressure in an evaporator thereby expelling water by distillation and drying the residual solid overnight in an air oven at 80°C.

Referential Example 7

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 20 g of methacryloyl group-containing methoxy poly(ethylene glycol) (a product of Shinnakamura Kagaku Kogyo K.K. having a polymerization degree of poly(ethylene glycol) moiety, n, of about 23 and an average molecular weight of about 1,100, found by elementary analysis to have an oxygen content of 37%, and marketed under trademark designation of "NK Ester M-230G"), 5 g of industrial grade divinylbenzene (a mixture of 55% by weight of divinylbenzene, 35% by weight of ethyl styrene, etc. produced by Wako Pure Chemical Industries Ltd.), and 75 g of styrene was placed and stirred by a dispersing device at a rate of 20,000 rotations per minute for two minutes as kept swept with nitrogen. The resultant mixture was subjected to a polymerization reaction by three hours' heating at 70°C and four hours' heating at 90°C. By the determination of the non-volatile content of the produced reaction solution, the conversion of the monomer was found to be 100%. A solid polymerization product as a copolymer (I) (hereinafter referred to as "additive (7")) was obtained by heating the reaction solution under a decreased pressure in an evaporator thereby expelling water by distillation and drying the residual solid overnight in an air oven at 80°C.

Referential Example 8

In a 1,000 mℓ, four-neck flask provided with a stirrer, a reflux condenser, a thermometer, and a nitrogen port, 567 g of isopropyl alcohol, 6 g of azo-bis-isobutylonitrile, 10 g of methacryloyl group-containing methoxy poly(ethylene glycol) as a polymerizable monomer (A) (a product of Shinnakamura Kagaku Kogyo K.K. having a polymerization degree of poly(ethylene glycol) moiety, n, of about 23 and an average molecular weight of about 1,100, found by elementary analysis to have an oxygen content of 37%, and marketed under trademark designation of "NK Ester M-230G"), 20 g of industrial grade divinylbenzene (a mixture of 55% by weight of divinylbenzene as a cross-linking monomer, 35% by weight of ethyl styrene, etc. produced by Wako Pure Chemical Industries Ltd.), 30 g of methacryloyl group-containing poly(dimethyl siloxane) as a silicone type polymerizable monomer (a product of Chisso Corporation having an average molecular weight of about 5,000 and a silicon content of 36% and marketed under trademark designation of "Sairapurehn FMO721"), and 40 g of styrene were placed and stirred at normal room temperature for 30 minutes as kept swept with nitrogen. The resultant mixture was subjected to a polymerization reaction by 20 hours' heating at 65°C and four hours' heating at 83°C. By the determination of the non-volatile content of the produced reaction solution, the conversion of the monomer was found to be 100%. A silicone oil dispersion of a copolymer (I) (having the copolymer (I) content of 20% by weight; hereinafter referred to as "additive dispersion (8)") was obtained by adding dropwise 400 g of silicone oil (produced by Shin-etsu Chemical Industry Co., Ltd. and marketed under product code of "KF96-20cs") to the reaction solution and heating the produced mixture under a decreased pressure in an evaporator thereby expelling the volatile content by distillation.

Referential Example 9

In a 2,000 mℓ, four-neck flask provided with a stirrer, a reflux condenser, a thermometer, and a nitrogen port, 700 g of isopropyl alcohol, 6 g of azo-bis-isobutylonitrile, 5 g of poly(vinyl pyrrolidone), 1.5 g of methacryloyl group-containing poly(ethylene glycol) as a polymerizable monomer (A) (a product of Nippon Oils & Fats Co., Ltd. having a polymerization degree of poly(ethylene glycol) moiety, n, of 7 to 9, an average molecular weight of about 450, and an oxygen content of 37% and marketed under trademark designation of "Burenmah PE-350"), 3 g of industrial grade divinylbenzene (a mixture of 55% by weight of divinylbenzene as a cross-linking monomer, 35% by weight of ethyl styrene, etc. produced by Wako Pure Chemical Industries Ltd.), 7 g of methacryloyl group-containing poly(dimethyl siloxane) as a silicone type polymerizable monomer (a product of Chisso Corporation having an average molecular weight of about 1,000 and a silicon content of 33% and marketed under trademark designation of "Sairapurehn FMO711"), and 90.5 g of styrene were placed and stirred at normal room temperature for 30 minutes as kept swept with nitrogen. The resultant mixture was subjected to a polymerization reaction by 20 hours'heating at 65°C and four hours'heating at 83°C. By the determination of the non-volatile content of the produced reaction solution, the conversion of the monomer was found to be 100%. A silicone oil dispersion of a copolymer (I) (having a copolymer (I) content of 20% by weight; hereinafter referred to as "additive dispersion (9)) was obtained by adding dropwise 400 g of silicone oil (produced by Shin-etsu Chemical Industry Co., Ltd. and marketed under trademark designation of "KF96-10cs") to the reaction solution and then heating the mixture under a decreased pressure in an evaporator thereby expelling the volatile content by distillation.

Referential Example 10

In a 1,000 mℓ, four-neck flask provided with a stirrer, a reflux condenser, a thermometer, and a nitrogen port, 567 g of isopropyl alcohol, 5 g of azo-bis-isobutylonitrile, 30 g of methacryloyl group-containing poly-(ethylene glycol) poly(tetraethylene glycol) as a polymerizable monomer (A) (a product of Nippon Oils & Fats Co., Ltd. having a polymerization degree of poly(ethylene glycol) moiety, n, of 10, a polymerization degree of poly(tetramethylene glycol) moiety, n, of 5, an average molecular weight of about 900, and an oxygen content of 31% and marketed under trademark designation of "Burenmah 55PET-800"), 10 g of industrial grade divinylbenzene (a mixture of 55% by weight of divinylbenene as a cross-linking monomer, 35% by weight of ethyl styrene, etc. produced by Wako Pure Chemical Industries Ltd.), and 60 g of methacryloyl group-containing poly(dimethyl siloxane) as a silicone type polymerizable monomer (a product of Chisso Corporation having an average molecular weight of about 10,000 and a silicon content of 37% and marketed under trademark designation of "Sairapurehn FMO725") were placed and stirred at normal room temperature for 30 minutes as kept swept with nitrogen. The resultant mixture was subjected to a polymerization reaction by 20 hours'heating at 65°C and four hours'heating for 83°C. By the determination of the non-volatile content of the produced reaction solution, the conversion of the monomer was found to be 98%. A silicone oil dispersion of a copolymer (I) (having a copolymer (I) content of 20% by weight; hereinafter referred to as "additive dispersion (10)") was obtained by adding dropwise 392 g of silicone oil of 20 cs (produced by Shin-etsu Chemical industry Co., Ltd. and marketed under product code of "KF96-20cs") to the reaction solution and heating the resultant mixture under a decreased pressure in an evaporator thereby expelling the volatile content by distillation.

Referential Example 11

In a 1,000 mℓ, four-neck flask provided with a stirrer, a reflux condenser, a thermometer, and a nitrogen port , 300 g of isopropyl alcohol, 267 g of toluene, 3 g of benzoyl peroxide, 10 g of methacryloyl group-containing acrylonitrile-styrene copolymer as a polymerizable monomer (A) (a product of Toa Gosei Chemical Industry Co., Ltd. having an average molecular weight of about 6,000 and a nitrogen content of 5.8% and marketed under trademark designation of "Macromonomer AN-6"), 10 g of hexamethylene dimethacrylate as a cross-linking monomer, 15 g of methacryloyl group-containing poly(dimethyl siloxane) as a silicone type polymerizable monomer (a product of Chisso Corporation having an average molecular weight of about 10,000 and a silicone content of 37% and marketed under trademark designation of "Sairapurehn FMO725"), and 70 g of styrene were placed and stirred at normal room temperature for 30 minutes as kept swept with nitrogen. The resultant mixture was subjected to a polymerization reaction by 20 hours'heating at 70°C and four hours'heating at 83°C. By the determination of the non-volatile content of the produced reaction solution, the conversion of the monomer was found to be 100%. A silicone oil dispersion of a copolymer (I) (having a copolymer (I) content of 20% by weight; hereinafter referred to as "additive dispersion (11)") was obtained by adding dropwise 400 g of silicone oil of 20 cs (produced by Shin-etsu Chemical Industry Co., Ltd. and marketed under product code of "KF96-20cs") to the reaction solution and heating the mixture under a decreased pressure in an evaporator thereby expelling the volatile content by distillation.

Referential Example 12

In a 1,000 mℓ, four-neck flask provided with a stirrer, a reflux condenser, a thermometer, and a nitrogen port, 400 g of isopropyl alcohol, 167 g of toluene, 4 g of azo-bis-isobutylonitrile, 10 g of methacryloyl group-containing poly(methyl methacrylate) as a polymerizable monomer (A) (a product of Toa Gosei Chemical Industry Co., Ltd. having an average molecular weight of about 6,000, found by elementary analysis to have an oxygen content of 32%, and marketed under trademark designation of "Macromonomer AA-6"), 10 g of hexamethylene dimethacrylate as a cross-linking monomer, 30 g of tris(trimethyl siloxy) silylpropyl methacrylate as a silicone type polymerizable monomer (a product of Shin-etsu Chemical Industry Co., Ltd. having a molecular weight of about 422 and a silicon content of 26% and marketed under product code of "X-22-5002"), and 50 g of styrene were placed and stirred at normal room temperature as kept swept with nitrogen. The produced mixture was subjected to a polymerization reaction by 20 hours'heating at 65°C and four hours'heating at 83°C. By the determination of the non-volatile content of the produced reaction solution, the conversion of the monomer was found to be 100%. A silicone oil dispersion of a copolymer (I) (having a copolymer (I) content of 20% by weight; hereinafter referred to as "additive dispersion (12)") was obtained by adding dropwise 400 g of silicone oil of 20 cs (produced by Shin-etsu Chemical Industry Co., Ltd. and marketed under product code of "KF96-20cs") to the reaction solution and heating the produced mixture under a decreased pressure in an evaporator thereby expelling the volatile content by distillation.

Referential Example 13

In a 1,000 mℓ, four-neck flask provided with a stirrer, a reflux condenser, a thermometer, and a nitrogen port, 400 g of isospropyl alcohol, 4 g of azo-bis-isobutylonitrile, 20 g of methacroyloyl group-containing polybutyl acrylate as a polymerizable monomer (A) (a product of Toa Gosei Chemical Industry Co., Ltd. having an average molecular weight of about 6,000 and an oxygen content of 28% and marketed under trademark designation of "Macromonomer AB-6"), 10 g of industrial grade divinylbenzene (a mixture of 55% by weight of divnylbenzene as a cross-linking monomer, 35% by weight of ethyl styrene, etc. produced by Wako Pure Chemical Industries ltd.), 30 g of methacryloyl group-containing poly(dimethyl siloxane) as a silicone type polymerizable monomer (a product of Chisso Corporation having an average molecular weight of about 5,000 and a silicon content of 36% and marketed under trademark designation of "Sairapurehn FMO721"), and 40 g of styrene were placed and stirred at normal room temperature for 30 minutes as kept swept with nitrogen. The resultant mixture was subjected to a polymerization reaction by 20 hours' heating at 65°C and four hours'heating at 83°C. By the determination of the non-volatile content of the produced reaction solution, the conversion of the monomer was found to be 100%. A silicone oil dispersion of a copolymer (I) (having a copolymer (I) content of 20% by weight; hereinafter referred to as "additive dispersion (13)") was obtained by adding dropwise 400 g of silicone oil of 20 cs (produced by Shin-etsu Chemical Industry Co., Ltd. and marketed under product code of "KF96-20cs") to the reaction solution and heating the resultant mixture under a decreased pressure in an evaporator thereby expelling the volatile content by distillation.

Referential Example 14

In a 1,000 mℓ, four-neck flask provided with a stirrer, a reflux condenser, a thermomenter, and a nitrogen port, 400 g of isopropyl alcohol, 4 g of azo-bis-isobutylonitrile, 12 g of methacryloyl group-containing methoxy polyethylene glycol as a polymerizable monomer (A) (a product of Shinnakamura Kagaku Kogyo K.K. having a polymerization degree of poly(ethylene glycol) moiety, n, of about 23, an average molecular weight of about 1,100, and a nitrogen content of 37% and marketed under trademark designation of "NK Ester M-230G"), 10 g of diallyl phthalate as a cross-linking monomer, 28 g of methacryloyl group-containing poly(dimethyl siloxane) (a product of Chisso Corporation having an average molecular weight of about 5,000 and a silicon content of 36% and marketed under trademark designation of "Sairapurehn FMO721"), 5 g of butyl methacrylate, and 45 g of styrene were placed and stirred at normal room temperature for 30 minutes as kept sweped with nitrogen. The resultant mixture was subjected to a polymerization reaction by 20 hours'heating at 65°C and four hours'heating at 83°C. By the determination of the solidsnon-volatile content of the produced reaction solution, the conversion of the monomer was found to be 100%. A silicone oil dispersion of a copolymer (I) (having a copolymer (I) content of 20% by weight; hereinafter referred to as "additive dispersion (14)") was obtained by adding dropwise 400 g of silicone oil of 20 cs (produced by Shin-etsu Chemical Industry Co., Ltd. and marketed under product code of "KF96-20cs") to the reaction solution and heating the resultant mixture under a decreased pressure in an evaporator thereby expelling the volatile content by distillation.

Referential Example 15

In a 1,000 mℓ, four-neck flask provided with a stirrer, a reflux condenser, a thermometer, and a nitrogen port, 567 g of isopropyl alcohol, 6 of of azo-bis-isobutylonitrile, 10 g of methacryloyl group-containing methoxy poly(ethylene glycol) as a polymerizable monomer (A) (a product of Shinnakamura Kagaku Kogyo K.K. having a polymerization degree of poly(ethylene glycol) moiety, n, of about 23, an average molecular weight of about 1,100, and an oxygen content of 37% and marketed under trademark designation of "NK Ester M-230G"), 30 g of methacyloyl group-containing poly(dimethyl siloxane) as a silicone type copolymerizable monomer (a product of Chisso Corporation having an average molecular weight of about 5,000 and a silicon content of 36% and marketed under trademark designation of "Sairapurehn FMO721"), and 60 g of styrene were placed and stirred at normal room temperature for 30 minutes as kept swept with nitrogen. The resultant mixture was subjected to a polymerization reaction by 20 hours' heating at 65°C and four hours'heating at 83°C. By the determination of the non-volatile content of the produced reaction solution, the conversion of the monomer was found to be 100%. A silicone oil dispersion of a copolymer (I) (having a copolymer (I) content of 20% by weight; hereinafter referred to as "additive dispersion (15)") was obtained by adding dropwise 400 g of silicone oil of 20 cs (produced by Shin-etsu Chemical Industry Co., Ltd. and marketed under product code of "KF96-20cs") to the reaction solution and heating the resultant mixture under a decreased pressure in an evaporator thereby expelling the volatile content by distillation.

Referential Example 16

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. The resultant solution and a solution obtained by dissolving 1 g of methacryloyl group-containing methoxy poly(ethylene glycol) (a product of Shinnakamura Kagaku Kogyo K.K. having a polymerization degree of poly(ethylene glycol) moiety, n, of about 23 and an average molecular weight of about 1,100, found by elementary analysis to have an oxygen content of 37%, and marketed under trademark designation of "NK Ester M-230G") in 99 g of styrene were stirred by a dispersing device at a rate of 20,000 rotations per minute for two minutes as kept swept with nitrogen. The resultant mixture was subjected to a polymerization reaction by three hours'heating at 70°C and four hours'heating at 90°C. By the determination of the non-volatile content of the produced reaction solution, the conversion of the monomer was found to be 100%. A solid polymerization product (hereinafter referred to as "additive (1) for comparison") was obtained by heating the reaction solution under a decreased pressure in an evaporator thereby expelling water by distillation and drying the residual solid overnight in an air oven at 80°C.

Referential Example 17

Four hundred (400) g of deionized water, 4 g of sodium dodecylsulfonate, and 1 g of sodium persulfate were placed and dissolved in one another in a 1,000 mℓ, four-neck flask provided with a stirrer, a reflux condenser, a thermometer, and a nitrogen port. In the resultant solution, a monomer mixture consisting of 30 g of industrial grade divinylbenzene (a mixture of 55% by weight of divinylbenzene, 35% by weight of ethyl styrene, etc. produced by Wako Pure Chemical Industries Ltd.) and 70 g of styrene was placed and stirred by a dispersion device at a rate of 20,000 rotations per minute for two minutes as kept swept with nitrogen. The resultant mixture was subjected to a polymerization reaction by three hours'heating at 70°C and four hours'heating at 90°C. By the determination of the non-volatile content of the produced reaction solution, the convertion of the monomer was found to be 100%. A solid polymerization product (hereinafter referred to as "additive (2) for comparison") was obtained by heating the reaction solution under a decreased pressure in an evaporator thereby expelling water by distillation and drying the residual solid overnight in an air oven at 80°C. The average particle diameter of this product was found to be 0.1 μm from an electron micrograph.

Referential Example 18

Four hundred (400) g of deionized water and 5 g of polyvinyl alcohol (produced by Kuraray Co., Ltd. and marketed under trademark designation of "Kuraray Poval PVA-205") were placed and dissolved in each other in a 1,000 mℓ, four-neck flask provided with a stirrer, a reflux condenser, a thermometer, and a nitrogen port. To the resultant solution was added a solution obtained by dissolving 2 g of benzoyl peroxide in a monomer mixture consisting of 30 g of industrial grade divinylbenzene (a mixture of 55% by weight of divinylbenzene, 35% by weight of ethyl styrene, etc. produced by Wako Pure Chemical Industires Ltd.) and 70 g of styrene. The resultant mixture was stirred by a dispersing device at a rate of 15,000 rotations per minute for 30 minutes as swept simultaneously with nitrogen and then subjected to a polymerization reaction by eight hours' heating at 70°C and four hours'heating at 90°C. By the determination of the non-voaltile content of the produced reaction solution, the conversion of the monomer was found to be 100%. A solid polymerization product (hereinafter referred to as "additive (3) for comparison") was obtained by separating the solids content of this reaction solution by filtration, thoroughly washing the separated solids content with acetone and water, and drying the washed solids content overnight in an air oven at 80°C. The average particle diameter of this product was found to be 1 μm by the examination of an electron micrograph of the solid polymerization product.

Example 1

One thousand and two hundreds (1,200) g of deionized water and 16 g of polyvinyl alcohol (produced by Kuraray Co., Ltd. and marketed under trademark designation of "Kuraray Poval PVA-205") were placed and dissolved in each other in a 3,000 mℓ, four-neck flask provided with a stirrer, a reflux condenser, a thermometer, and a nitrogen port. To the resultant solution was added a mixture consisting of 250 g of styrene, 50 g of industrial grade divinylbenzene (a mixture of 55% by weight of divinylbenzene, 35% by weight of ethyl styrene, etc. produced by Wako Pure Chemical Industries Ltd.), and 5 g of benzoyl peroxide. The resultant mixture in the flask was dispersed by the use of a dispersing device operated at a rate of 4,000 rpm and heated at 70°C for six hours and at 90°C for two hours. By separating the solids content of the produced reaction solution by filtration, thoroughly washing the separated solids content with acetone and water, and drying the washed solids content by the use of an air oven at 80°C for 12 hours, there was obtained 291 g of a cross-linked polymer (hereinafter referred to as "cross-linked polymer (1)").

Then, in 1,000 mℓ, a three-neck flask provided with a stirrer, a reflux condenser, and a thermometer, 500 g of concentrated sulfuric acid of a concentration of 98% by weight and 100 g of the cross-linked polymer (1) added as cooled with ice thereto were stirred and heated at 80°C for 24 hours to effect a sulfonation reaction. Thereafter, the resultant reaction mixture was poured into water at 0°C and the solids content thereof was separated by filtration and washed with water.

The solid product thus obtained was neutralized with 380 ml of an aqueous 10 wt% sodium hydroxide solution and thoroughly washed with water. Then, it was dried by the use of a vacuum oven at 80°C for 10 hours, to afford 187 g of organic polymer particles having an average particle diameter of 11 μm (hereinafter referred to as "dispersed-phase particles (1)"). The anionic dissociation group density of the dispersed-phase particles (1) was 4.2 mg equivalent/g.

An electrorheological fluid (1) of this invention was obtained by drying 30 g of the dispersed-phase particles (1) at 150°C for three hours, moistening the dried particles by 30 minutes'standing in a chamber kept at a temperature of 20°C and a relative humidity of 60%, and dispersing the moistened particles uniformly in a dispersing medium prepared by adding 1.4 g of the additive (1) obtained in Referential Example 1 to 68.6 g of partially hydrogenated triphenyl (produced by Nippon Steel Chemical Co., Ltd. and marketed under trademark designation of "Therm-S 900").

Example 2

An electrorheological fluid (2) of this invention was obtained by following the procedure of Example 1, excepting 2 g of the additive (2) obtained in Referential Example 2 was used in place of the additive (1) and 68 g of triethyl diphenyl (produced by Nippon Steel Chemical Co., Ltd. and marketed under trademark designation of "Therm-S 800") was used in place of "Therm-S 900."

Example 3

An electrorheological fluid (3) of this invention was obtained by following the procedure of Example 1, excepting 2 g of the additive (3) obtained in Referential Example 3 was used in place of the additive (1) and the amount of the partially hydrogenated triphenyl (produced by Nippon Steel Chemical Co., Ltd. and marketed under trademark designation of "Therm-S 900") to be used was changed to 68 g.

14

Example 4

An electrorheological fluid (4) of this invention was obtained by following the procedure of Example 1, excepting 2 g of the additive (4) obtained in Referential Example 4 was used in place of the additive (1) and the amount of the partially hydrogenated triphenyl (produced by Nippon Steel Chemical Co., Ltd. and marketed under trademark designation of "Therm-S 900") to be used was changed to 68 g.

Example 5

An electrorheological fluid (5) of this invention was obtained by following the procedure of Example 1, excepting 2.5 g of the additive (5) obtained in Referential Example 5 was used in place of the additive (1) and the amount of the partially hydrogenated triphenyl (produced by Nippon Steel Chemical Co., Ltd. and marketed under trademark designation of "Therm-S 900")to be used was changed to 67.5 g.

Example 6

An electrorheological fluid (6) of this invention was obtained by following the procedure of Example 1, excepting 4 g of the additive (6) obtained in Referential Example 6 was used in place of the additive (1) and the amount of the partially hydrogenated triphenyl (produced by Nippon Steel Chemical Co., Ltd. and marketed under trademark designation of "Therm-S 900") to be used was changed to 68.5 g.

Example 7

An electrorheological fluid (7) of this invention was obtained by following the procedure of Example 1, excepting 1.5 g of the additive (7) obtained in Referential Example 7 was used in place of the additive (1) and the amount of the partially hydrogenated triphenyl (produced by Nippon Steel Chemical Co., Ltd. and marketed under trademark designation of "Therm-S 900") to be used was changed to 66 g.

Example 8

An electrorheological fluid (8) of this invention was obtained by following the procedure of Example 1, excepting 15 g of the additive dispersion (8) obtained in Referential Example 8 was used in place of the additive (1) and 55 g of silicone oil of 20 cs (produced by Shin-etsu Chemical Industry Co., Ltd. and marketed under product code of "KF96-20cs") was used in place of "Therm-S 900."

Example 9

An electrorheological fluid (9) of this invention was obtained by following the procedure of Example 1, excepting 35 g of the additive dispersion (9) obtained in Referential Example 9 was used in place of the additive (1) and 35 g of silicone oil of 10cs (produced by Shin-etsu Chemical Industry Co., Ltd. and marketed under product code of "KF96-10cs") was used in place of "Therm-S 900."

Example 10

An electrorheological fluid (10) of this invention was obtained by following the procedure of Example 1, excepting 2.5 g of the additive dispersion (10) obtained in Referential Example 10 was used in place of the additive (1) and 67.5 g of silicone oil of 20 cs (produced by Shin-etsu Chemical Industry Co., Ltd. and marketed under product code of "KF96-20cs") was used in place of "Therm-S 900."

Example 11

An electrorheological fluid (11) of this invention was obtained by following the procedure of Example 1, excepting 20 g of the additive dispersion (11) obtained in Referential Example 11 was used in place of the additive (1) and 50 g of silicone oil of 20 cs (produced by Shin-etsu Chemical Industry Co., Ltd. and marketed under product code of "KF96-20cs") was used in place of "Therm-S 900."

15

Example 12

An electrorheological fluid (12) of this invention was obtained by following the procedure of Example 1, excepting 10 g of the additive dispersion (12) obtained in Referential Example 12 was used in place of the additive (1) and 60 g of silicone oil of 20 cs (produced by Shin-etsu Chemical Industry Co., Ltd. and marketed under product code of "KF96-20cs") was used in place of "Therm-S 900."

Example 13

An electrorheological fluid (13) of this invention was obtained by following the procedure of Example 1, excepting 10 g of the additive dispersion (13) obtained in Referential Example 13 was used in place of the additive (1) and 60 g of silicone oil of 20 cs (produced by Shin-etsu Chemical Industry Co., Ltd. and marketed under product code of "KF96-20cs") was used in place of "Therm-S 900."

Example 14

An electrorheological fluid (14) of this invention was obtained by following the procedure of Example 1, excepting 25 g of the additive dispersion (14) obtained in Referential Example 14 was used in place of the additive (1) and 45 g of silicone oil of 20 cs (produced by Shin-etsu Chemical Industry Co., Ltd. and marketed under product code of "KF96-20cs") was used in place of "Therm-S 900."

Example 15

An electrorheological fluid (15) of this invention was obtained by following the procedure of Example 1, excepting 15 g of the additive dispersion (15) obtained in Referential Example 15 was used in place of the additive (1) and 60 g of silicone oil of 20 cs (produced by Shin-etsu Chemical Industry Co., Ltd. and marketed under product code of "KF96-20cs") was used in place of "Therm-S 900."

Example 16

One thousand two hundreds (1,200) g of deionized water and 16 g of polyvinyl alcohol (produced by Kuraray Co., Ltd. and marketed under trademark designation of "Kuraray Poval PVA-205") were placed and dissolved in each other in a 3,000 mℓ, four-neck flask provided with a stirrer, a reflux condenser, a thermometer, and a nitrogen port. To the resultant solution was added a mixture consisting of 250 g of styrene, 50 g of industrial grade divinylbenzene (a mixture of 55% by weight of divinylbenzene, 35% by weight of ethyl styrene, etc. produced by Wako Pure Chemical Industires Ltd.) , and 5 g of benzoyl peroxide. Then, the mixture consequently produced in the flask was dispersed by the use of a dispersing device operated at a rate of 20,000 rpm and heated at 70°C for six hours and at 90°C for two hours. The solids content of the produced reaction solution was separated by filtration, thoroughly washed with acetone and water, and then dried by the use of an air oven at 80°C for 12 hours, to afford 278 g of a cross-linked polymer (hereinafter referred to as "cross-linked spolymer (2)").

Then, in a 1,000 mℓ, three-neck flask provided with a stirrer, a reflux condenser, and a thermometer, 500 g of concentrated sulfuric acid having a concentration of 98% by weight and 100 g of the cross-linked polymer (2) added as cooled with ice were stirred and heated at 80°C for 24 hours to effect a sulfonation reaction. Thereafter, the reaction solution produced in the flask was poured into water at 0°C and the solids content thereof consequently precipitated therein was separated by filtration and washed with water.

The solid product was neutralized with 370 ml of an aqueous 10 wt% sodium hydroxide solution and then thoroughly washed with water. Subsequently, the washed product was dried by the use of a vacuum drier at 80°C for 10 hours, to afford 181 g of organic polymer particles having an average particle diameter of 2.7 μm (hereinafter referred to as "dispersed-phase particles (2)"). The anionic dissociation group density of the dispersed-phase particles (2) was 4.3 mg equivalent/g.

An electrorheological fluid (16) of this invention was obtained by drying 30 g of the dispersed-phase particles (2) at 150°C for three hours, moistening the dried particles by 20 minutes'standing in a chamber kept at a temperature of 20°C and a relative humidity of 60%, and uniformly dispersing the moistened particles in a dispersing medium obtained by adding 2.5 g of the additive (3) obtained in Referential Example 3 to 67.5 g of a partially hydrogenated triphenyl (produced by Nippon Steel Chemical Co., Ltd. and marketed under product code of "Therm-S 900").

Example 17

An electrorheological fluid (17) of this invention was obtained by following the procedure of Example 16, excepting 15 g of the additive dispersion (8) obtained in Referential Example 8 was used in place of the additive (3) and 55 g of silicone oil of 20 cs (produced by Shin-etsu Chemical Industry Co., Ltd. and marketed under product code of "KF96-20cs") was used in place of "Therm-S 900."

Example 18

One thousand and two hundreds (1,200) g of deionized water and 16 g of polyvinyl alcohol (produced by Kuraray Co., Ltd. and marketed under trademark designation of "Kuraray Poval PVA-205") were placed and dissolved in each other in a 3,000 mℓ, four-neck flask provided with a stirrer, a reflux condenser, a thermometer, and a nitrogen port. To the resultant solution was added a mixture consisting of 250 g of styrene, 50 g of industrial grade divinylbenzene (a mixture of 55% by weight of divinylbenzene, 35% by weight of ethyl styrene, etc. produced by Wako Pure Chemical Industries Ltd.), and 5 g of benzoyl peroxide. Then, the mixture formed in the flask was dispersed by the use of a dispersing device operated at a rate of 8,000 rpm and heated at 70°C for six hours and at 90°C for two hours. By separating the solids content of the reaction solution by filtration, thoroughly washing the separated solids content with acetone and water, and drying the washed solids content by the use of an air oven at 80°C for 12 hours, there was obtained 287 g of a cross-linked polymer (hereinafter referred to as "cross-linked polymer (3)").

Then, in a 1,000 mℓ, three-neck flask provided with a stirrer, a reflux condenser, and a thermometer, 500 g of concentrated sulfuric acid having a concentration of 98% by weight and 100 g of the cross-linked polymer (3) added thereto as cooled with ice were stirred and heated at 80°C for 24 hours to effect a sulfonation reaction. Subsequently, the mixture obtained in the flask was poured into water at 0°C and the solid product was separated therefrom by filtration and washed with water.

The solid product was neutralized with 370 ml of an aqueous 10 wt% sodium hydroxide solution and thoroughly washed with water. Then, it was dried by the use of a vacuum oven at 80°C for 10 hours, to afford 181 g of organic polymer particles having an average particle diameter of 5.5 µm (hereinafter referred to as "dispersed-phase particles (3)"). The anionic dissociation group density of the dispersed-phase particles (3) was 4.3 mg equivalent/g.

An electrorheological fluid (18) of this invention was obtained by drying 30 g of the dispersed-phase particles (3) at 150°C for three hours, moistening the dried particles by 20 minutes'standing in a chamber kept at a temperature of 20°C and a relative humidity of 60%, and uniformly dispersing the moistened particles in a dispersing medium prepared by adding 2.5 g of the additive (3) obtained in Referential Example 3 to 67.5 g of a partially hydrogenated triphenyl (produced by Nippon Steel Chemical Co., Ltd. and marketed under trademark designation of "Therm-S 900").

Example 19

An electrorheological fluid (19) of this invention was obtained by following the procedure of Example 18, excepting 15 g of the additive dispersion (8) obtained in Referential Example 8 was used in place of the additive (3) and 54 g of silicone oil of 20 cs (produced by Shin-etsu Chemical Industry Co., Ltd. and marketed under product code of "KF96-20cs") was used in place of "Therm-S 900."

Example 20

One thousand and two hundreds (1,200) g of deoionized water and 12 g of polyvinyl alcohol (produced by Kuraray Co., Ltd. and marketed under trademark designation of "Kuraray Poval PVA-205") were placed and dissolved in each other in a 3,000 mℓ, four-neck flask provided with a stirrer, a reflux condenser, a thermometer, and a nitrogen port. To the resultant solution was added a mixture consisting of 250 g of styrene, 50 g of industrial grade divinylbenzene (a mixture of 55% by weight of divinylbenzene, 35% by weight of ethyl styrene, etc. produced by Wako Pure Chemical Industries Ltd.), and 5 g of benzoyl peroxide. Then, the mixture consequently formed in the flask was dispersed at a rate of 600 rpm and heated at 70°C for six hours and 90°C for four hours. The solid product was separated by filtration, thoroughly washed with acetone and water, dried by the use of a hot air drier at 80°C for 12 hours, to afford 294 g of a cross-linked polymer (hereinafter referred to as "cross-linked polymer (4)").

Then, in a 1,000 mℓ, three-neck flask provided with a stirrer, a reflux condenser, and a thermometer, 500 g of concentrated sulfuric acid of a concentration of 98% by weight and 100 g of the cross-linked

17

polymer (4) added thereto as cooled with ice were stirred and heated at 80°C for 24 hours to effect a sulfonation reaction. Thereafter, the mixture in the flask was poured into water at 0°C and the solids content thereof was separated by filtration and washed with water.

The solid product thus obtained was neutralized with 370 ml of an aqueous 10 wt% sodium hydroxide solution and thoroughly washed with water. It was subsequently dried by the use of a vacuum oven at 80°C for 10 hours, to afford 188 g of organic polymer particles having an average particle diameter of 28 $\mu$m (hereinafter referred to as "dispersed-phase particles (4)"). The anionic dissociation group density of the dispersed-phase particles (4) was 4.2 mg equivalent/g.

An electrorheological fluid (20) of this invention was produced by drying 30 g of the dispersed-phase particles (4) at 150°C for three hours, moistening the dried particles by 40 minutes'standing in a chamber kept at a temperature of 20°C and a relative humidity of 60%, and uniformly dispersing the moistened particles in a dispersing medium obtained by adding 1 g of the additive (3) obtained in Referential Example 3 to 69 g of partially hydrogenated triphenyl (produced by Nippon Steel Chemical Co., Ltd. and marketed under trademark designation of "Therm-S 900").

Control 1

An electrorheological fluid for comparison (hereinafter referred to as "fluid for comparison (1)") was produced by drying 30 g of the dispersed-phase particles (1) of Example 1 at 150°C for three hours, moistening the dried particles by 30 minutes'standing in a chamber kept at a temperature of 20°C and a relative humidity of 60%, and then dispersing the moistened particles in 70 g of a partially hydrogenated triphenyl (produced by Nippon Steel Chemical Co., Ltd. and marketed under trademark designation of "Therm-S 900").

Control 2

An electrorheological fluid for comparison (hereinafter referred to as "fluid for comparison (2)") was produced by drying 30 g of the dispersed-phase particles (1) of Example 1 at 150°C for three hours, moistening the dried particles by 30 minutes'standing in a chamber kept at a temperature of 20°C and a relative humidity of 60%, and dispersing the moistened particles in 70 g of triethyl diphenyl (produced by Nippon Steel Chemical Co., Ltd. and marketed under trademark designation of "Therm-S 800").

Control 3

An electrorheological fluid for comparison (hereinafter referred to as "fluid for comparison (3)") was produced by following the procedure of Example 3, excepting 2 g of the additive (1) for comparison obtained in Referential Example 16 was used as dissolved in Therm-S 900 in place of the additive (3).

Control 4

An electrorheological fluid for comparison (hereinafter referred to as "fluid for comparison (4)") was produced by following the procedure of Example 3, excepting 2 g of the additive (2) for comparison obtained in Referential Example 17 was used as dispersed in Therm-S 900 in place of the additive (3).

Control 5

An electrorheological fluid for comparison (hereinafter referred to as "fluid for comparison (5)") was produced by following the procedure of Example 3, excepting 2 g of the additive (3) for comparison obtained in Referential Example 18 was used as dispersed in Therm-S 900 in place of the additive (3).

Control 6

An electrorheological fluid for comparison (hereinafter referred to as "fluid for comparison (6)") was produced by drying 30 g of the dispersed-phase particles (1) of Example 1 at 150°C for three hours, moistening the dried particles by 30 minutes'standing in a chamber kept at a temperature of 20°C and a relative humidity of 60%, and dispersing the moistened particles in 70 g of silicone oil of 20 cs.

Control 7

An electrorheological fluid for comparison (hereinafter referred to as "fluid for comparison (7)") was produced by drying 30 g of the dispersed-phase particles (1) of Example 1 at 150°C for three hours, moistening the dried particles by 30 minutes'standing in a chamber kept at a temperature of 20°C and a relative humidity of 60%, and dispersing the moistened particles in 70 g of silicone oil of 10 cs.

Control 8

An electrorheological fluid for comparison (hereinafter referred to as "fluid for comparison (8)") was produced by following the procedure of Example 8, excepting 3 g of the additive (2) for comparison obtained in Referential Example 17 was used as dispersed in 67 g of silicon oil of 20 cs in place of the additive dispersion (8).

Control 9

An electrorheological fluid for comparison (hereinafter referred to as "fluid for comparison (9)") was produced by following the procedure of Example 8, excepting 3 g of the additive (3) for comparison obtained in Referential Example 18 was used as dispersed in 67 g of silicone oil of 20 cs in place of the additive dispersion (8).

Control 10

An electrorheological fluid for comparison (hereinafter referred to as "fluid for comparison (10)") was produced by following the procedure of Example 8, excepting 10 g of an amino-modified silicone as a nitrogen-containing silicone type additive (produced by Shin-etsu Chemical Industry Co., Ltd. and marketed under product code of "KF8005") was used in place of the additive dispersion (8) and the amount of silicone oil to be used was changed to 60 g.

Control 11

An electrorheological fluid for comparison (hereinafter referred to as "fluid for comparison (11)") was produced by drying 30 g of the dispersed-phase particles (2) of Example 16 at 150°C for three hours, moistening the dried particles by 20 minutes'standing in a chamber kept at a temperature of 20°C and a relative humidity of 60%, and dispersing the moistened particles in 70 g of Therm-S 900.

Control 12

An electrorheological fluid for comparison (hereinafter referred to as "fluid for comparison (12)") was produced by drying 30 g of the dispersed-phase particles (2) of Example 17 at 150°C for three hours, moistening the dried particles by 20 minutes'standing in a chamber kept at a temperature of 20°C and a relative humidity of 60%, and dispersing the moistened particles in 70 g of silicone oil of 20 cs.

Control 13

An electrorheological fluid for comparison (hereinafter referred to as "fluid for comparison (13)") was produced by drying 30 g of the dispersed-phase particles (3) of Example 18 at 150°C for three hours, moistening the dried particles by 40 minutes'standing in a chamber kept at a temperature of 20°C and a relative humidity of 60%, and dispersing the moistened particles in 70 g of Therm-S 900.

Control 14

An electrorheological fluid for comparison (hereinafter referred to as "fluid for comparison (14)") was produced by drying 30 g of the dispersed-phase particles (3) of Example 18 at 150°C for three hours, moistening the dried particles by 40 minutes'standing in a chamber kept at a temperature of 20°C and a relative humidity of 60%, and dispersing the moistened particles in 70 g of silicone oil of 20 cs.

Control 15

An electrotheological fluid for comparison (hereinafter referred to as "fluid for comparison (15)") was produced by drying 30 g of the dispersed-phase particles (4) of Example 20 at 150°C for three hours, moistening the dried particles by 40 minutes'standing in a chamber kept at a temperature of 20°C and a relative humidity of 60%, and dispersing the moistened particles in 70 g of Therm-S 900.

Example 21

The electrorheological fluids (1) to (20) of this invention and the fluids for comparison (1) to (15) obtained in Examples 1 to 20 and Controls 1 to 15 were severally tested for viscosity at 23°C in the absence of application of an electric field. Then, they were each placed in a test tube measuring 150 mm in height and 15 mm in diameter to a height of 100 mm from the bottom and sealed tightly therein. They were left standing at normal room tempeature as kept under observation as to the speed of sedimentation of the dispersed-phase particles to clock the time (in days) required for these particles to sediment to a depth of 5 mm from the surface of the fluid and evaluate the stability of dispersion. These electrorheological fluids taken in a fixed volume of 50 ml were severally placed in a container having an inner volume of 100 ml, tightly sealed therein, left standing for one month, and then rotated at a fixed rate of 30 rotations per minute to find a cumulative number of rotations required for each fluid to resume its original homogeneous state and evaluate redispersibility. The results are shown in Table 1 and Table 2.

The electrorheological fluids were severally placed in a coaxial electric-field double wall cylindrical rotary viscosimeter and, under the conditions of 1.0 mm of gap between the inner and outer tubes, 400 $S^{-1}$ of shear speed, and 25°C of temperature, tested for the shear stress (initial magnitude) produced in response to application of an AC external electric field of 4,000 V/mm (frequency 50 Hz) and for the ensuant current density (initial magnitude). The viscosimeter holding the sample was continuously operated at 25°C for three days under the application of an external electric field of 4,000 V/mm. At the end of this continued operation of the viscosimeter, the sample was tested for shear stress and current density to determine the stability of the fluid to resist the effect of aging. The results are shown in Tables 1 and 2.

Table 1

| | Viscosity (c P) | Stability of dispersion (day) | Redispersibility (times) | Shear stress (g/cm²) | | Current density (μA/cm²) | |
|---|---|---|---|---|---|---|---|
| | | | | Initial | After 3 days | Initial | After 3 days |
| Electrorheological fluid of this invention (1) | 152 | 2 | 50 | 25 | 23 | 21 | 24 |
| "          (2) | 44 | 0.7 | 20 | 23 | 24 | 18 | 19 |
| "          (3) | 155 | 3 | 50 | 22 | 22 | 19 | 20 |
| "          (4) | 151 | 2 | 50 | 24 | 24 | 20 | 21 |
| "          (5) | 165 | 2 | 50 | 25 | 25 | 22 | 22 |
| "          (6) | 170 | 1.5 | 100 | 22 | 22 | 19 | 19 |
| "          (7) | 150 | 1.2 | 50 | 18 | 20 | 22 | 23 |
| "          (8) | 90 | 7 | <5 | 21 | 22 | 20 | 21 |
| "          (9) | 58 | 3 | 10 | 22 | 22 | 20 | 21 |
| "          (10) | 92 | 1.5 | 20 | 22 | 23 | 21 | 22 |
| "          (11) | 100 | 4 | <5 | 19 | 20 | 20 | 22 |
| "          (12) | 78 | 3 | 10 | 21 | 21 | 20 | 20 |
| "          (13) | 70 | 2 | 10 | 22 | 23 | 22 | 23 |
| "          (14) | 86 | 1.5 | 20 | 21 | 22 | 22 | 23 |
| "          (15) | 92 | 6 | <5 | 22 | 22 | 19 | 19 |
| "          (16) | 153 | >14 | 20 | 8 | 8 | 20 | 22 |
| "          (17) | 100 | >30 | 10 | 7 | 8 | 19 | 21 |
| "          (18) | 150 | >7 | 20 | 15 | 16 | 21 | 22 |
| "          (19) | 92 | >7 | <5 | 15 | 16 | 20 | 22 |
| "          (20) | 148 | 0.4 | 50 | 33 | 34 | 26 | 28 |

21

Table 2

| | Viscosity (c P) | Stability of dispersion (Day) | Redispersibility (times) | Shear stress (g/cm²) | | Shear density ($\mu$A/cm²) | |
|---|---|---|---|---|---|---|---|
| | | | | Initial | After 3 days | Initial | After 3 days |
| Electrorheological fluid for comparison (1) | 150 | 0.1 | >100 | 27 | 28 | 24 | 26 |
| " (2) | 27 | 0.02 | 100 | 26 | 25 | 22 | 23 |
| " (3) | 150 | 2 | >100 | 21 | 20 | 16 | 16 |
| " (4) | 155 | 0.3 | >100 | 25 | 27 | 22 | 25 |
| " (5) | 151 | 0.1 | >100 | 25 | 26 | 22 | 24 |
| " (6) | 50 | 0.04 | >100 | 25 | 26 | 22 | 23 |
| " (7) | 31 | 0.02 | 100 | 26 | 27 | 23 | 26 |
| " (8) | 110 | 0.1 | 50 | 21 | 25 | 22 | 24 |
| " (9) | 94 | 0.08 | 100 | 20 | 25 | 21 | 23 |
| " (10) | 100 | 1.5 | >100 | 18 | 19 | 27 | (Note 1) |
| " (11) | 152 | 1.3 | 100 | 10 | 11 | 21 | 23 |
| " (12) | 51 | 0.7 | >100 | 9 | 10 | 20 | 22 |
| " (13) | 148 | 0.3 | >100 | 25 | 26 | 22 | 23 |
| " (14) | 50 | 0.1 | >100 | 24 | 25 | 22 | 23 |
| " (15) | 148 | 0.02 | >100 | 35 | 38 | 27 | 29 |

(Note 1)   Not measurable because of limited capacity of the instrument used.

It is clearly noted from Table 1 that the electrorheological fluids (1) to (20) of this invention exhibited outstanding electrorheological characteristics as evinced by large magnitudes of shear force generated in response to application of a relatively small electric field and small ensuant current densities, excelled in stably retaining the generated shear force and current density in spite of aging, enjoyed low viscosity in the absence of an electric field, and excelled in stability of dispersion and redispersibility.

It has been demonstrated that the electrorheological fluids (1) and (3) to (7) far excelled in point of stability of dispersion and redispersibility as compared with the fluid for comparison (1) which used the same dispersed phase and dispersing medium and avoided the use of an additive and the fluids for comparison (4) and (5) which used minute particles of a copolymer of styrene and divinylbenzene. It has been also found that the electrorheological fluids (1) and (3) to (7) excelled in point of redispersibility as compared with the fluid for comparison (3) which used neither a polyfunctional polymerizable monomer nor a silicone type polymerizable monomer. It has been found that the electrorheological fluid (2) far excelled in point of stability of dispersion and redispersibility as compared with the fluid for comparison (2) which used the same dispersed phase and dispersing medium and avoided the use of an additive.

It has been found that the electrorheological fluids (8) and (10) to (15) prominently excelled in point of stability of dispersion and redispersibility as compared with the fluid for comparison (6) which used the same dispersed phase and dispersing medium and avoided the use of an additive and the fluids for comparison (8) and (9) which used fine particles of a copolymer of styrene and divinylbenzene. It has been also found that as compared with the fluid for comparison (10) which used an amino-modified silicone as an additive and betrayed deficiency in current properties and redispersibility, the electrorheological fluids (8) and (10) to (15) excelled in current properties and enjoyed improvement in stability of dispersion and redispersibility.

It has been found that as compared with the fluid for comparison (7) which used the same dispersed phase and dispersing medium and avoided the use of an additive, the electrorheological fluid (9) prominently excelled in stability of dispersion and redispersibility.

Further, the electrorheological fluids (16) to (20) far excelled respectively the fluids for comparison (11) to (15) in point of stability of dispersion and redispersibility.

**Claims**

1. An electrorheological fluid comprising a dispersed phase of dielectric particles having an average particle diameter in the range of from 1 to 50 microns, a dispersing medium of an electrically non-conducting oil, and an additive, said additive being a copolymer (I) obtained by polymerizing a raw-material monomer mixture having as essential components thereof a polymerizable monomer (A) and at least one polymerizable monomer (B) selected from the group consisting of cross-linking monomers and silicone type polymerizable monomers and optionally containing another polymerizable monomer (C), said polymerizable monomer (A) being a polymerizable monomer having as a main structural unit thereof a structural unit (a) represented by the general formula (i):

$$-(R^1-O)_n- \qquad (i)$$

wherein $R^1$ stands for an ethylene group, a propylene group, a trimethylene group or a tetramethylene group and n for a numerical value of at least 4 and/or a structural unit (b) represented by the general formula (ii):

$$-(CH_2-CR^2X)- \qquad (ii)$$

wherein $R^2$ stands for a hydrogen atom or a methyl group, X for -CN or -$COOR^3$, and $R^3$ for an alkyl group of 1 to 4 carbon atoms and having an average molecular weight of at least 400, said cross-linking monomer being at least one member selected from the group consisting of aromatic compounds having at least two polymerizable unsaturated groups in the molecular unit thereof, compounds having at least two (meth)acryl groups in the molecular unit thereof, and compounds having at least two allyl groups in the molecular unit thereof, and said silicone type polymerizable monomer being a silicone type polymerizable monomer having as a main structural units thereof a structural unit (c) represented by the general formula (iii):

$$-(SiR^4R^5O)- \qquad (iii)$$

wherein $R^4$ and $R^5$ independently stand for an alkyl group or an aryl group and/or a structural unit (d) represented by the general formula (iv):

$$(R^6_3SiO)_3Si- \qquad (iv)$$

wherein $R^6$ stands for an alkyl group or an aryl group and having an average molecular weight of at least 400.

2. An electrorheological fluid according to claim 1, wherein said copolymer (I) is substantially insoluble in said non-conducting oil.

3. An electrorheological fluid according to claim 1, wherein said copolymer (I) is obtained by polymerizing a raw-material monomer mixture comprising 0.2 to 40% by weight of said polymerizable monomer (A), 0.5 to 15% by weight of a cross-linking monomer as said polymerizable monomer (B), and 45 to 99.3% by weight of said polymerizable monomer (C) (providing the total of the amounts of said three components is 100% by weight).

4. An electrorheological fluid according to claim 3, wherein said non-conducting oil is a silicone type non-conducting liquid.

5. An electrorheological fluid according to claim 3, wherein said copolymer (I) is a polymer produced by at least one method selected from the group consisting of the methods of emulsion polymerization, precipitation polymerization, dispersion polymerization, and suspension polymerization.

6. An electrorheological fluid according to claim 5, wherein said copolymer (I) is a polymer produced by polymerization carried out in at least one solvent selected from the group consisting of aqueous type solvents and alcohol type solvents.

7. An electrorheological fluid according to claim 3, wherein said dielectric particles destined to form said dispersed phase are those of an organic polymer possessing a cation-exchange capacity.

8. An electrorheological fluid according to claim 7, wherein said dielectric particles destined to form said dispersed phase are those of a sulfonic acid group-containing polystyrene type polymer.

9. An electrorheological fluid according to claim 1, wherein said copolymer (I) is obtained by polymerizing a raw-material monomer mixture comprising 0.5 to 40% by weight of said polymerizable monomer (A), 3 to 70% by weight of a silicone type polymerizable monomer as said polymerizable monomer (B), and 0 to 90% by weight of said polymerizable monomer (C) (providing the total of the amounts of said three components is 100% by weight).

10. An electrorheological fluid according to claim 9, wherein said non-conducting oil is a silicone type non-conducting liquid.

11. An electrorheological fluid according to claim 9, wherein said copolymer (I) is a polymer produced by at least one method selected from the group consisting of the methods of emulsion polymerization, precipitation polymerization, dispersion polymerization, and suspension polymerization.

12. An electrorheological fluid according to claim 11, wherein said copolymer (I) is a polymer produced by polymerization performed in at least one solvent selected from the group consisting of aqueous type solvents and alcohol type solvents.

13. An electrorheological fluid according to claim 9, wherein said dielectric particles destined to form said dispersed phase are those of an organic polymer having a cation-exchange capacity.

14. An electrorheological fluid according to claim 13, wherein said dielectric particles destined to form said dispersed phase are those of a sulfonic acid group-containing polystyrene type polymer.

15. An electrorheological fluid according to claim 1, wherein said copolymer (I) is obtained by polymerizing a raw-material monomer mixture comprising 0.5 to 40% by weight of said polymerizable monomer (A), 0.5 to 15% by weight of a cross-linking monomer and 3 to 70% by weight of a silicone type polymerizable monomer as said polymerizable monomer (B), and 0 to 90% by weight of said polymerizable monomer (C) (providing the total of the weights of said three components is 100% by weight).

16. An electrorheological fluid according to claim 15, wherein said non-conducting oil is a silicone type non-conducting liquid.

17. An electrorheological fluid according to claim 15, wherein said copolymer (I) is a polymer produced by polymerization carried out by at least one method selected from the group consisting of methods of emulsion polymerization, precipitation polymerization, dispersion polymerization, and suspension polymerization.

**18.** An electrorheological fluid according to claim 17, wherein said copolymer (I) is a polymer produced by polymerization carried out in at least one solvent selected from the group consisting of aqueous type solvents and alcohol type solvents.

**19.** An electrorheological fluid according to claim 15, wherein said dielectric particles destined to form said dispersed phase are those of an organic polymer possessing a cation-exchange capacity.

**20.** An electrorheological fluid according to claim 19, wherein said dielectric particles destined to form said dispersed phase are those of a sulfonic acid group-containing polystyrene type polymer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 393 692 (HERCULES INCORPORATED) <br> * the whole document * | 1-5,7,8 | C10M171/00 |
| Y | PATENT ABSTRACTS OF JAPAN <br> vol. 15, no. 450 (C-885)15 November 1991 <br> & JP-A-31 92 195 ( NIPPON SHOKUBAI KAGAKU KOGYO CO. LTD. ) 22 August 1991 <br> * abstract * | 1-5,7,8 | |
| Y | DE-A-2 802 494 (THE SECRETARY OF STATE FOR DEFENCE IN HER BRITANNIC MAJESTY'S GVNT) <br> * the whole document * | 1-5,7 | |
| A | PATENT ABSTRACTS OF JAPAN <br> vol. 15, no. 353 (C-865)6 September 1991 <br> & JP-A-31 37 196 ( ASAHI CHEM. IND. CO. LTD. ) 11 June 1991 <br> * abstract * | 1,9,15 | |
| Y | PATENT ABSTRACTS OF JAPAN <br> vol. 14, no. 176 (C-707)9 April 1990 <br> & JP-A-20 26 631 ( MITSUBISHI PETROCHEM CO. LTD. ) <br> * abstract * | 1,2,9,10 | **TECHNICAL FIELDS SEARCHED (Int. Cl.5 )** <br><br> C10M |
| D,Y | US-A-4 772 407 (CARLSON) <br> * the whole document * | 1,2,9,10 | |
| E | EP-A-0 472 991 (BAYER AG.) <br> * the whole document * | 1,2,9,10 | |
| A | EP-A-0 432 601 (BAYER AG.) <br> * the whole document * | 1-20 | |

The present search report has been drawn up for all claims

| Place of search | Date of completion of the search | Examiner |
|---|---|---|
| THE HAGUE | 08 DECEMBER 1992 | DE LA MORINERIE |

EPO FORM 1503 03.82 (P0401)